# EUROPEAN PATENT APPLICATION

(11) **EP 1 933 573 A1**
(43) Date of publication of application: **18.06.2008**
(21) Application number: 06752976.8
(22) Date of filing: 16.06.2006
(51) Int. Cl.: H04Q 7/20

(54) **A MOBILE SHORT MESSAGE SYSTEM AND A DELIVERING METHOD FOR MOBILE SHORT MESSAGE**

(30) Priority: 07.09.2005 CN 200510098780
(71) Applicant: Huawei Technologies Co., Ltd., Longgang District Shenzhen, Guangdong Province, 518129 (CN)
(72) Inventor: LI, Xinggui, Longgang District Shenzhen Guangdong 518129 (CN); XIE, Feng, Longgang District Shenzhen Guangdong 518129 (CN); YUAN, Yongliang, Longgang District Shenzhen Guangdong 518129 (CN); ZHANG, Zhiming, Longgang District Shenzhen Guangdong 518129 (CN)
(74) Representative: Körber, Martin Hans
(86) International application number: PCT/CN2006/001365
(87) International publication number: WO 2007/028302

(57) **Abstract**

The present invention discloses a mobile short message system including a mobile switching center of the originating part (O_MSC), a service control point (SCP) and a mobile switching center of the terminating part (T_MSC). The principle of the system is that the SCP directly receives the short message sent by the originating subscriber via the O_MSC, authenticates the subscriber, and sends the short message to the T_MSC, and charges the subscriber according to the transmission result response of the short message returned by the T_MSC so as to accomplish the subject of delivering the short message to the terminating subscriber, and authenticating and charging the subscriber. It avoids the device incompatibility problem existed in the prior art which is caused when a special interface is set between the short message service center (SMSC) and the SCP to authenticate and charge the subscriber. In addition, the present invention further adds an SMSC based on above system for accomplishing the function of caching and resending the short message when the short message transmission fails for the first time. Besides, the present invention also discloses a method for delivering the mobile short message based on above system.

## Description

### Field of the Technology

The present invention relates to a communication technology and particularly to a system and a method for delivering the mobile short message.

### Background of the Invention

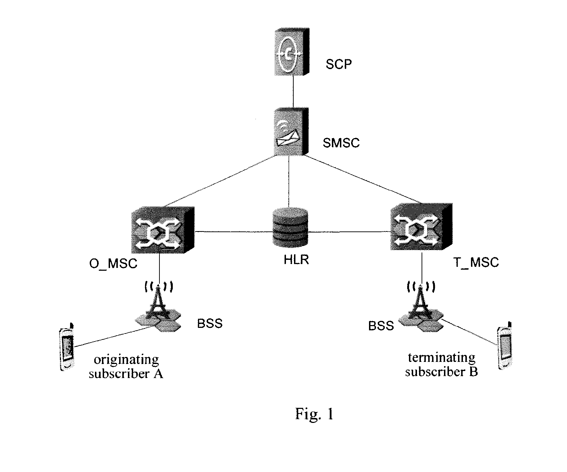

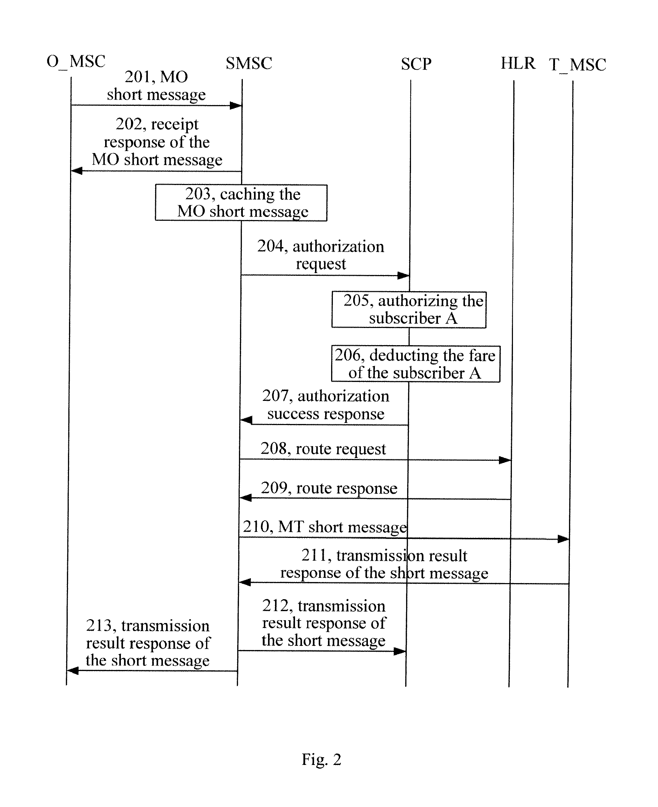

China Mobile Communication Corporation (CMCC) proposes a short message prepaid solution based on the modified protocol of short message point to point (SMPP) when it promotes a prepaid service named "Travel in China" to solve the charging problem when a prepaid subscriber receives and sends the short message. One structure of a mobile short message system adopting this solution is shown as Fig. 1, which mainly includes an originating mobile switching center (O_MSC), a terminating mobile switching center (T_MSC), home location register (HLR) of the terminating subscriber, a short message service center (SMSC) and a service control point (SCP). Taking the charging for the originating subscriber A as an example, a method for delivering the mobile short message based on the above mentioned system is explained as follows. The process of the method shown as Fig. 2 mainly includes the following blocks:
Block 201 : The O_MSC receives the short message originating (MO) short message sent by the originating subscriber A and sends the received MO short message to the home SMSC of the originating subscriber A.
   The operator designates the home SMSC of the subscriber. When the mobile subscriber sends the MO short message, it firstly reads the SMSC number configured in its own terminal and then carries the SMSC number in the MO short message to be sent, and sends the MO short message to the O_MSC.
Block 202: The SMSC returns a short message receipt response to the O_MSC.
Block 203: The SMSC caches the received MO short message and transforms the format of the received MO short message, i.e. transforms the MO short message into the short message terminating (MT) short message.
Block 204: The SMSC sends an authentification request to the SCP.
Block 205: After receiving the authentification request, the SCP judges whether the originating subscriber A has the right of sending the short message according to the pre-stored account information of the originating subscriber A. If the originating subscriber A has the right, a block 206 is executed; otherwise the SCP returns an authentification failure response to the SMSC and this process ends.
Block 206: The fee for sending the short message of this time is deducted from the account of the originating subscriber A.
Block 207: The SCP returns an authentification success response to the SMSC.
Block 208: After receiving the authentification success response, the SMSC sends a route request to the home HLR of the terminating subscriber B for acquiring a T_MSC number.
Block 209: The HLR returns the visitor location T_MSC number of the terminating subscriber B to the SMSC.
Block 210: The SMSC chooses a route according to the received T_MSC number and sends the MT short message to the T_MSC.
Block 211: The T_MSC transfers the received MT short message to the terminating subscriber B and returns the transmission result response of the short message to the SMSC.
Block 212: The SMSC reports the transmission result response of the short message to the SCP.
Block 213: The SMSC returns the transmission result response of the short message to the O_MSC and this process ends.

In above mentioned blocks 212 to 213, when the transmission result response of the short message received by the SMSC is a transmission success response of the short message, above mentioned block of returning the transmission success response of the short message to the SCP and O_MSC may be directly executed. When the transmission result response of the short message received by the SMSC is a transmission failure response of the short message, the SMSC starts the function of resending the short message according to the setup, i.e. according to the setting resending strategy in above mentioned block 208, the SMSC deletes the short message and reports the transmission failure response of the short message to the SCP when the time for caching the short message exceeds the setting longest time for caching the short message. Then, the SCP fills the deducted short message transmission fee back to the account of the originating subscriber A. Finally, the SMSC returns the transmission failure response of the short message to the O_MSC and this process ends.

It can be seen from the above mentioned procedure of delivering the short message that, in the authenticating and charging the originating subscriber from the block 204 to block 207, it is necessary to send an authentification request to the SCP by the SMSC, to authenticate and charge the originating subscriber by the SCP, and to return an authentification response to the SMSC. An interface specially used to accomplish the function of authenticating and charging is needed to be configured on the SMSC and the SCP for accomplishing the above mentioned procedure. However, except the CMCC, the SMSC and the SCP of other existing operators normally do not have the above mentioned interface. Therefore, the interface configuration of the SMSC and the SCP is needed to be changed if the related devices of other operators are adopted, resulting in a higher cost of reconstruction and maintenance for the devices. In another aspect, the SMSC and the SCP are also needed to comply with the same communication protocol. Currently, what is adopted is the SMPP protocol which can only be adapted to its own inner system that has been expanded. The protocol is in poor compatibility with the devices of other developer because it is not a standard protocol. Therefore, it is difficult to accomplish the intercommunication among the devices of different developers and there is no prospect for large-scale promotion.

### Summary of the Invention

Regarding what is mentioned above, the present invention is to provide a mobile short message system and a method for delivering the mobile short message.

Firstly, the mobile short message system provided in accordance with one aspect of the present invention includes an originating mobile switching center (O_MSC), a service control point (SCP) and a terminating mobile switching center (T_MSC).

The O_MSC is adapted to receive a short message sent by an originating subscriber and transfer the short message to the SCP;

The SCP is adapted to receive the short message, authenticate the subscriber, transfer the received short message to the T_MSC, and charge the subscriber according to a received transmission result response of the short message;

The T_MSC is adapted to receive the short message transferred by the SCP, transfer the received short message to a terminating subscriber and return the transmission result response of the short message to the SCP.

In above mentioned system, the SCP is a home SCP of the originating subscriber, adapted to authenticate and charge the originating subscriber. Alternatively, the SCP is a home SCP of the terminating subscriber, adapted to authenticate and charge the terminating subscriber. Alternatively the SCP is a home SCP of the originating subscriber and the terminating subscriber, adapted to authenticate and charge the originating subscriber and the terminating subscriber.

In above mentioned system, the SCP includes a first home SCP of the originating subscriber and a second home SCP of the terminating subscriber.

The first SCP is adapted to receive the short message transferred by the 0_MSC, authenticate the originating subscriber, send an authentification request to the second SCP and receive the authentification response returned by the second SCP; transfer the received short message to the T_MSC, receive the transmission result response of the short message returned by the T_MSC, charge the originating subscriber according to the received transmission result response of the short message, and transfer the received transmission result response of the short message to the second SCP.

The second SCP is adapted to receive the authentification request sent by the first SCP, authenticate the terminating subscriber, and return the authentification response to the first SCP; and charge the terminating subscriber according to the received transmission result response of the short message.

In above mentioned system, the system further includes a home short message service center (SMSC) of the originating subscriber.

The SMSC is adapted to receive the short message transferred by the SCP, cache the short message, transform the format of the received short message, and send the short message after the format transformation to the SCP; receive the transmission result response of the short message transferred by the SCP, and start a process for resending the short message to the terminating subscriber when the received transmission result response of the short message is a transmission failure response of the short message; delete the cached short message when the received transmission result response of the short message is a transmission success response of the short message or the time for caching the short message exceeds the preset longest time for caching the short message.

In above mentioned system, the SCP is further adapted to cache the received short message, transform the format of the received short message; receive the transmission result response of the short message returned by the T_MSC, and start a process for resending the short message to the terminating subscriber when the received transmission result response of the short message is a transmission failure response of the short message; delete the cached short message when the received transmission result response of the short message is a transmission success response of the short message or the time for caching the short message exceeds the preset longest time for caching the short message.

The method for delivering the mobile short message provided in accordance with another aspect of the present invention is based on a mobile short message system including an originating mobile switching center (O_MSC), a service control point (SCP) and a terminating mobile switching center (T_MSC). The method includes following blocks.
a, transferring a short message to the SCP after receiving, by the O_MSC, the short message sent by an originating subscriber;
b, authenticating the subscriber after receiving the short message by the SCP, and transferring the short message to the T_MSC after authenticating successfully;
c, transferring the short message to a terminating subscriber after receiving the short message by the T_MSC and returning a transmission result response of the short message to the SCP; and
d, charging, by the SCP, the subscriber according to the received transmission result response of the short message.

In above mentioned method, the block d is deducting a short message fee from an account of the subscriber when the transmission result response of the short message received by the SCP is a transmission success response of the short message.

In above mentioned method, the block b further includes deducting a short message fee from an account of the subscriber when the SCP successfully authenticates the subscriber and executing the block for sending the short message to the T_MSC; and

The block d is filling the deducted short message fee back to the account of the subscriber when the transmission result response of the short message received by the SCP is a transmission failure response of the short message.

In above mentioned method, the block b further includes transferring the received short message to the SMSC after receiving the short message by the SCP; caching the short message after receiving the short message by the SMSC, transforming the format of the received short message, and sending the short message after the format transformation to the SCP.

The block of transferring the short message to the T_MSC in the block b is transferring the received short message after the format transformation to the T_MSC.

After the block d, the method further includes:
e, transferring, by the SCP, the transmission result response of the short message returned from the T_MSC to the SMSC;
f, deleing the cached short message when the transmission result response of the short message received by the SMSC is the transmission success response of the short message and this process ends; otherwise, starting the process for resending the short message after the format transformation to the terminating subscriber, deleting the cached short message when the time for caching the short message exceeds the preset longest time for caching the short message, and this process ends.

In above mentioned method, the block b further includes, caching the short message after receiving the short message by the SCP, transforming the format of the received short message, and executing the block for authenticating the subscriber in the block b.

The block of transferring the short message to the T_MSC in the block b is transferring, by the SCP, the short message after the format transformation to the T_MSC.

After the block d, the method further includes:
e1, deleting the cached short message when the transmission result response of the short message received by the SCP is the transmission success response of the short message and this process ends; otherwise, starting a process for resending the short message after the format transformation to the terminating subscriber, deleting the cached short message when the time for caching the short message exceeds the preset longest time for caching the short message, and this process ends.

In above mentioned method, the block of transforming the format of the short message is transforming the short message originating MO short message into a short message terminating MT short message.

In a word, the mobile short message system in accordance with the present invention includes an O_MSC, an SCP and a T_MSC. The SCP directly receives the short message sent by the originating subscriber via the O_MSC, authenticates the subscriber, and sends the short message to the T_MSC. The subscriber is charged according to the transmission result response of the short message returned by the T_MSC. Therefore, the subject of delivering the short message to the terminating subscriber, and authenticating and charging the subscriber is accomplished. And a problem of the incompatibility among devices of different companies is avoided, which results from setting a special authenticating and charging interface adopted in prior art between the SMSC and the SCP. Besides, the present invention further adds an SMSC adapted to accomplish the function of caching and resending when the short message fails to be sent based on above mentioned system so as to further improve the function for delivering the mobile short message in the present invention system.

### Brief Description of the Drawings

Fig. 1 is a structure schematic view of the existing mobile short message system adopted by the CMCC;
Fig. 2 is a signaling interaction diagram for delivering the mobile short message;
Fig. 3 is a structure schematic view of the mobile short message system of Embodiment 1 in accordance with the present invention;
Fig. 4 is a signaling interaction diagram for delivering the mobile short message of Embodiment 1 in accordance with the present invention;
Fig. 5 is a structure schematic view of the mobile short message system of Embodiment 1 in accordance with the present invention when the originating subscriber and the terminating subscriber belong to different SCPs.
Fig. 6 is a structure schematic view of the mobile short message system of Embodiment 2 in accordance with the present invention;
Fig. 7 is a signaling interaction diagram for delivering the mobile short message of Embodiment 2 in accordance with the present invention.

### Embodiments of the Invention

In order to make the subject, the technical solution and merits in accordance with the present invention clearer, the present invention is described in more details with the accompanying drawings as follows.

In the present invention, an SCP directly receives the short message sent by the originating subscriber via the O_MSC, authenticates the subscriber, transfers the received short message to the T_MSC, and charges the subscriber according to the transmission result response of the short message returned by the T_MSC so as to accomplish the subject of delivering the short message, and authenticating and charging the subscriber.

The present invention is referring to the delivering for the short message of prepaid subscribers and the charging solution thereof. The following description is mainly explained based on the situation that at lease one of the originating subscriber and the terminating subscriber is a prepaid subscriber. In order to the explain the present technical solution, the present invention provides two embodiments where the Embodiment 1 is explained in detail based on the situation that both of the originating subscriber and the terminating subscriber are the prepaid subscribers belonging to the same SCP.

### Embodiment 1

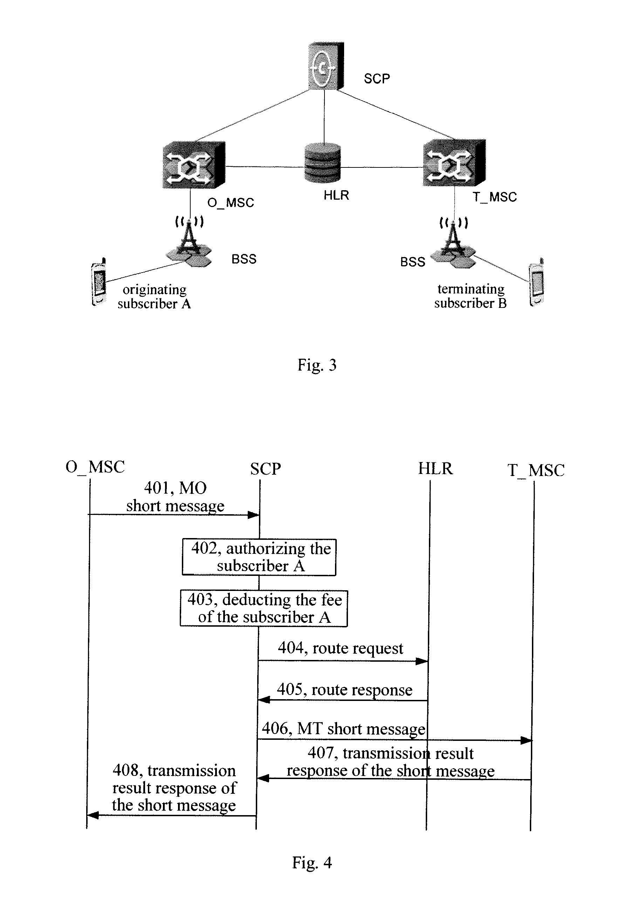

As shown in Fig. 3, the system structure in accordance with the present embodiment mainly includes an originating O_MSC, an SCP, an HLR of the terminating subscriber and a terminating T_MSC.

The O_MSC is used to transfer an MO short message to the SCP after receiving the MO short message sent by the originating subscriber;

The SCP mainly has two functions, i.e. a short message transferring function and a charging function.

The short message transferring function specifically includes, after receiving the MO short message transferred by the O_MSC, transforming the MO short message into a MT short message, acquiring a T_MSC number from the HLR of the terminating subscriber B, sending the MT short message whose destination is the acquired T_MSC number to the T_MSC, and receiving a transmission result response of the short message returned by the T_MSC.

There are mainly two accomplishment modes of the SCP charging function. The first mode is to deduct the short message fee of this time from the account of the subscriber before the SCP transfers the MT short message to the T_MSC, and fill the deducted short message fee back to the account of the subscriber after receiving a transmission failure response of the short message returned by the T_MSC. This mode may be called early-deduction mode because the fee is deducted from the account of the subscriber before the SCP transfers the short message. The second mode is to deduct the short message fee of this time from the account of the subscriber after receiving a transmission success response of the short message returned by the T_MSC instead of deducting the short message fee during the procedure that the SCP sends the short message to the terminating subscriber. This mode may be called late-deducted mode because the fee is deducted after receiving the transmission success response of the short message by the SCP.

Besides, above mentioned account whose short message fee is deducted by the SCP may also be configured according to the service requirement, i.e. the SCP may deduct the fee not only referring to one of the originating subscriber account and the terminating subscriber account but also referring to both of the originating subscriber account and the terminating subscriber account.

T_MSC is adapted to send the MT short message to the terminating subscriber and return the transmission result response of the short message to the SCP. The transmission result response of the short message includes the transmission success response of the short message or the transmission failure response of the short message.

The system structure of Embodiment I of the present invention is explained above. Taking the situation of adopting the early-deduction mode to deduct the fee for the originating subscriber as an example, the method for delivering the mobile short message based on above mentioned system is explained. The signaling interaction diagram of the method for delivering the mobile short message is shown as Fig. 4 including following blocks.

Block 401: The originating O_MSC sends the MO short message received from the originating subscriber A to the SCP.

Block 402: After receiving the MO short message, the SCP transforms the MO short message into the MT short message, and judge whether the originating subscriber A has the right to send the short message according to the stored account information of the originating subscriber A. If the originating subscriber A has the right, block 403 is executed. Otherwise, a refusal response is returned to the O_MSC and this process ends.

Block 403: The SCP deducts the short message fee of this time from the account of the originating subscriber A.

Block 404: The SCP sends a route request to the home HLR of the terminating subscriber B and acquires the T_MSC number.

Block 405: The HLR sends the T_MSC number to the SCP via a route response.

Block 406: The SCP sends the MT short message to the T_MSC according to the acquired T_MSC number.

Block 407: After receiving the MT short message, the T_MSC transfers the MT short message to the terminating subscriber B and returns the transmission result response of the short message to the SCP.

Block 408: The SCP returns the transmission result response of the short message to the O_MSC, and this process ends.

In above mentioned block 408, when the transmission result response of the short message received by the SCP is the transmission success response of the short message, the transmission success response of the short message is directly returned to the O_MSC and this process ends. Otherwise, the SCP fills the deducted short message fee back to the account of the originating subscriber A, returns the transmission failure response of the short message to the O_MSC and this process ends.

Above mentioned process adopts the early-deduction mode that the SCP firstly deducts the fee after authenticating the originating subscriber A successfully and then fills the deducted fee back to the account of the originating subscriber A after the short message transmission fails. The present embodiment may also be accomplished by adopting the late-deduction mode. When the late-deduction mode is adopted, in above mentioned block 402, the block 404 is directly executed after authenticating the originating subscriber A successfully. In above mentioned block 408, when the transmission result response of the short message received by the SCP is the transmission success response of the short message, the block of deducting the short message fee of this time from the account of the originating subscriber A in the block 403 is executed, and this process ends.

The accomplishment method of the short message service is explained when the fee is deducted referring to the originating subscriber as mentioned above. In the present embodiment, according to the service configuration, the fee may be deducted for the terminating subscriber or for both of the originating subscriber and terminating subscriber. The specific implement procedure is the same as above mentioned corresponding block of deducting the fee for the originating subscriber, which is not repeated here.

Besides, above mentioned embodiment 1 explains the technical solution of the present invention mainly referring to the situation that the originating subscriber and the terminating subscriber are prepaid subscribers belonging to the same SCP. Besides, there exist other situations that the originating subscriber and the terminating subscriber belong to different SCPs or only one of the originating subscriber and the terminating subscriber is a prepaid subscriber. Regarding above mentioned situations, the blocks adopted in above mentioned embodiment 1 may also be adopted to accomplish delivery of the short message.

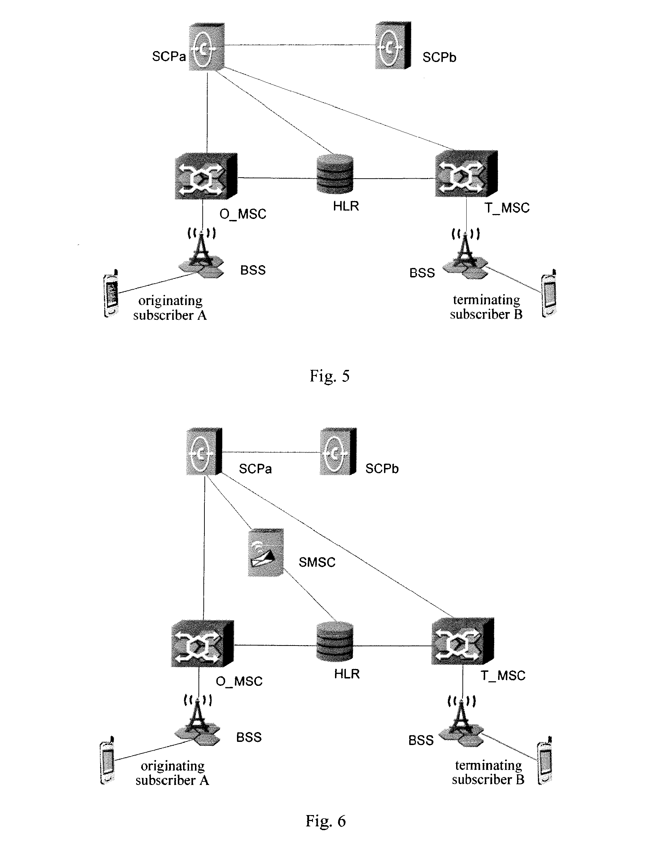

Regarding the situation that the originating subscriber and the terminating subscriber belong to different SCPs respectively, the system structure is shown as Fig. 5. The system includes a home SCPa of the originating subscriber A and a home SCPb of the terminating subscriber B.

The SCPa is adapted to receive the MO short message sent by the O_MSC, transform the received MO short message into a MT short message, authenticate and charge the originating subscriber A, send an authentification request to the SCPb, receive an authentification response returned by the SCPb, send the MT short message to the T_MSC, and receive the transmission result response of the short message returned by the T_MSC;

SCPb is adapted to receive the authentification request sent by the SCPa, authenticate and charge the terminating subscriber B, and return the authentification response to the SCPa. Other parts of the system are completely the same as the corresponding parts of the system in above mentioned embodiment. In the specific process for delivering the short message, except the added blocks that the SCPa sends the authentification request to the SCPb, the SCPb authenticates the terminating subscriber B or deducts the fee, and the SCPb returns the authentification response to the SCPa, other blocks are the same as the corresponding blocks in above mentioned embodiment. Unnecessary details are not given here.

Regarding the situation that only one of the originating subscriber and the terminating subscriber is a prepaid subscriber, there is only one SCP in a system. The SCP is adapted to authenticate the corresponding prepaid subscriber, deduct the fee and execute the corresponding function for delivering the short message. The SCP does not authenticate the other subscriber or deduct the fee for it. Other blocks are the same as the corresponding blocks in above mentioned embodiment. Unnecessary details are not given here.

In above mentioned Embodiment 1, the authentification and charging for the subscriber and the delivery for the short message are accomplished by setting the SCP connected to the O_MSC in the system. In the present invention, an SMSC may be further added based on above mentioned system to accomplish the function of resending the short message to the terminating subscriber when it fails to send the short message to the terminating subscriber B, which is explained in detail by following Embodiment 2 in accordance with the present invention.

### Embodiment 2

At first, taking the situation that the originating subscriber and the terminating subscriber are prepaid subscribers belonging to different SCPs respectively as an example, the mobile short message system of the present embodiment is explained as detail. The system structure is shown as Fig. 6 mainly including an originating O_MSC, an SCPa, an SCPb, a HLR of the terminating subscriber and a terminating T_MSC. The system in the present embodiment further includes an SMSC.

The O_MSC is adapted to accomplish transferring a MO short message sent by the originating subscriber A to the SCPa.

The SCPa is the home SCP of the originating subscriber A. The SCPa also has two functions, i.e. a short message transferring function and an authentification and charging function.

The short message transferring function specifically includes authenticating the originating subscriber A after receiving the MO short message transferred by the O_MSC, transferring the received MO short message to the SMSC when the authentification is successful; sending an authentification request to the SCPb after receiving the MT short message sent by the SMSC, sending the received MT short message to the T_MSC after receiving the authentification success response returned by the SCPb and sending a received transmission result response of the short message returned by the T_MSC to the SCPb and SMSC respectively. The transmission result response of the short message returned by the T_MSC includes a transmission success response of a short message and the transmission failure response of the short message.

The authentification and charging function of the SCPa also includes two accomplishment modes: an early-deduction mode and a late-deduction mode. When the early-deduction mode is adopted, it specifically includes, deducting the short message fee of this time from the account of the originating subscriber A after receiving the MT short message sent by the SMSC, and filling the pre-deducted short message fee back to the account of the originating subscriber A after receiving the transmission failure response of the short message reported by the T_MSC. When the late-deduction mode is adopted, it specifically includes, directly delivering the following MT short message instead of deducting the fee after the SCPa receives the MT short message sent by the SMSC, and deducting the short message fee of this time from the account of the originating subscriber A after receiving the transmission success response of the short message returned by the T_MSC.

The SCPb is a home SCP of the terminating subscriber. What is different to the SCPa is that the SCPb is only adapted to accomplish the function of authenticating and charging the terminating subscriber B. The function may also be accomplished according to the early-deduction mode and the late-deduction mode mentioned above. When the early-deduction mode is adopted, it specifically includes, authenticating the terminating subscriber B after receiving the authentification request sent by the SCPa, deducting the short message fee of this time from the account of the terminating subscriber B when the authentification is successful, returning the authentification result to the SCPa, and filling the pre-deducted fee back to the account of the terminating subscriber B after receiving the transmission failure response of the short message returned by the SCPa. When the late-deduction mode is adopted, it specifically includes, authenticating the terminating subscriber B instead of deducting the fee after receiving authentification request sent by the SCPa and deducting the short message fee of this time from the account of the terminating subscriber B after receiving the transmission success response of the short message returned by the SCPa.

The SMSC is adapted to cache the MO short message after receiving the MO short message sent by the SCPa, acquire the visitor location T MSC number from the HLR of the terminating subscriber B, transform the received MO short message into the MT short message, and send the MT short message to the SCPa; start the process of resending the MT short message to the terminating subscriber after receiving the transmission failure response of the short message returned by the SCPa, and delete the cached MO short message after receiving the transmission success response of the short message returned by the SCPa or when the time for caching the short message exceeds the preset longest time for caching the short message.

Above mentioned function of resending the MT short message specifically includes, when the SMSC receives the transmission failure response of the short message returned by the SCPa, choosing a resending strategy to restart the sending process of the MT short message, i.e. acquiring the T_MSC number from the HLR of the terminating subscriber B, sending the MT short message to the SCPa, and using the received T_MSC number as the ultimate destination address of the MT short message.

The T_MSC is adapted to receive the MT short message transferred by the SCPa, transfer the received MT short message to the terminating subscriber B, and return the transmission result response of the short message to the SCPa, where the transmission result response of the short message includes a transmission success response of the short message or a transmission failure response of the short message.

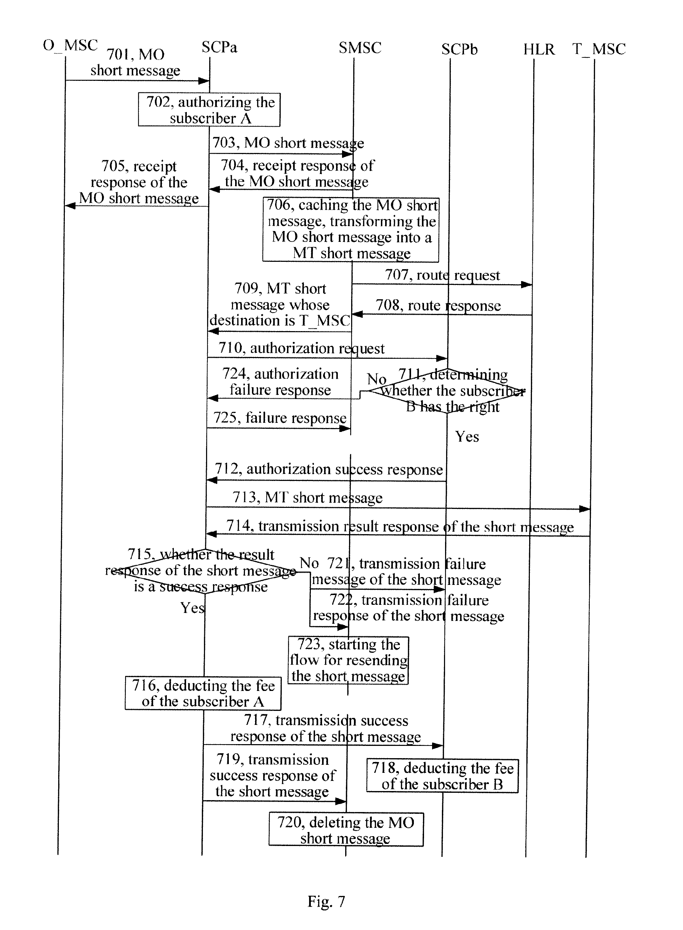

The system structure in Embodiment 2 of the present invention is explained as mentioned above. Taking the situation of deducting the fee for both of the originating subscriber and the terminating subscriber according to the late-deduction mode as an example, the method for delivering the mobile short message is explained based on above mentioned system. The signaling interaction for delivering the mobile short message of the method is shown as Fig. 7, which specifically includes the following blocks.

Block 701: The O_MSC sends the MO short message received from the originating subscriber A to the SCPa.

Block 702: After receiving the MO short message, the SCPa judges whether the originating subscriber A has the right to send the short message according to stored account information of the originating subscriber A. If the originating subscriber A has the right, a block 703 is executed, otherwise a refusal response is returned to the O_MSC and this process ends.

One mode for judging whether the originating subscriber A has the right to send the short message is to judge whether there is enough balance left in the account of the originating subscriber A for sending the short message.
Block 703: The SCPa sends a MO short message to the SMSC.
Block 704: The SMSC returns a receipt response of the MO short message to the SCPa.
Block 705: The SCPa transfers a receipt response of the short message returned by the SMSC to the O_MSC.
Block 706: The SMSC caches the MO short message and transforms the received MO short message into a MT short message after receiving the MO short message sent by the SCPa.
Block 707: The SMSC sends a route request to the home HLR of the terminating subscriber B and acquires the T_MSC number.
Block 708: The HLR returns the T_MSC number to the SMSC.
Block 709: The SMSC sends the MT short message to the SCPa and uses the received T_MSC number as the ultimate destination address of the MT short message.
Block 710: After receiving the MT short message sent by the SMSC, the SCPa inquires the address of the SCPb according to the number of the terminating subscriber B and sends an authentification request to the SCPb.
Block 711: SCPb authenticates the terminating subscriber B and judges whether the terminating subscriber B has the right to receive the short message after receiving the authentification request. If the terminating subscriber B has the right, a block 712 is executed; otherwise a block 724 is executed.
Block 712: The SCPb returns an authentification success response to the SCPa.
Block 713: The SCPa sends the received MT short message to the T_MSC after receiving the authentification success response.
Block 714: The T_MSC sends the MT short message to the terminating subscriber B and returns the transmission result response of the short message to the SCPa after receiving the MT short message.
Block 715: A block 716 is executed when the transmission result response of the short message received by the SCPa is the transmission success response of the short message; otherwise a block 721 is executed.
Block 716: The short message sending fee of this time is deducted from the account of the originating subscriber A.
Block 717: The SCPa returns the transmission success response of the short message to the SCPb.
Block 718: The SCPb deducts the short message receipt fee of this time from the account of the terminating subscriber B after receiving the transmission success response of the short message.
Block 719: The SCPa returns the transmission success response of the short message to the SMSC.
Block 720: SMSC deletes the cached MO short message after receiving the transmission success response of the short message and this process ends.
Block 721: The SCPa returns the transmission failure message of the short message to the SCPb.
Block 722: The SCPa returns the transmission failure response of the short message to the SMSC.
Block 723: After receiving the transmission failure response of the short message, the SMSC chooses a resending strategy according to the failure reason carried in the response and starts the process for resending the short message according the chosen resending strategy, i.e. the block 705 is executed again. The SMSC deletes the cached the MO short message when the time for caching the MO short message exceeds the preset longest time for caching the short message and this process ends.
Block 724: The SCPb returns an authentification failure response to the SCPa.
Block 725: The SCPa returns a failure response to the SMSC and this process ends.

In above mentioned Embodiment 2, an SMSC is added in the system for accomplishing the function for resending the short message to the terminating subscriber when it fails to send the short message to the terminating subscriber for the first time. The difference between the present solution and the prior art is that the SCP acts as a signaling transfer point (STP) between the MSC and the SMSC in the present embodiment. Therefore, it is only needed to use a normal message delivery interface between the SCP and the SMSC so as to avoid using a special authentification and charging interface. Certainly, a corresponding function may be configured for the SCP for resending the short message in the present invention. The process for resending the short message may be directly started via the SCP when it fails to send the short message to the terminating subscriber for the first time. The present invention may also adopt the early-deduction mode although the present embodiment is explained referring to the late-deduction mode. The specific execution procedure is the same as the corresponding blocks in Embodiment 1 mentioned above, which is not repeated here. Besides, regarding other situations that the originating subscriber and the terminating subscriber belong to the same SCP and only one of the originating subscriber and the terminating subscriber is a prepaid subscriber, the specific procedure is the same as the corresponding blocks in Embodiment 1 mentioned above. Unnecessary details will not be given here.

Though illustration and description of the present disclosure have been given with reference to embodiments thereof, it should be appreciated by persons of ordinary skill in the art that various changes in forms and details can be made without deviation from the scope of this disclosure, which are defined by the appended claims.

## Claims

1. A mobile short message system, comprising an originating mobile switching center (O_MSC), a service control point (SCP) and a terminating mobile switching center (T_MSC), wherein
the O_MSC is adapted to receive a short message sent by an originating subscriber and transfer the short message to the SCP;
the SCP is adapted to receive the short message, authenticate the subscriber, transfer the received short message to the T_MSC, and charge the subscriber according to a received transmission result response of the short message;
the T_MSC is adapted to receive the short message transferred by the SCP, transfer the received short message to a terminating subscriber and return the transmission result response of the short message to the SCP.

2. The system according to claim 1, wherein the SCP is a home SCP of the originating subscriber, adapted to authenticate and charge the originating subscriber; or the SCP is a home SCP of the terminating subscriber, adapted to authenticate and charge the terminating subscriber; or the SCP is a home SCP of the originating subscriber and the terminating subscriber, adapted to authenticate and charge the originating subscriber and the terminating subscriber.

3. The system according to claim 1, wherein the SCP comprises a first home SCP of the originating subscriber and a second home SCP of the terminating subscriber;
the first SCP is adapted to receive the short message transferred by the O_MSC, authenticate the originating subscriber, send an authentification request to the second SCP and receive an authentification response returned by the second SCP; and to transfer the received short message to the T_MSC, receive the transmission result response of the short message returned by the T_MSC, charge the originating subscriber according to the received transmission result response of the short message, and transfer the received transmission result response of the short message to the second SCP;
the second SCP is adapted to receive the authentification request sent by the first SCP, authenticate the terminating subscriber, return the authentification response to the first SCP, and charge the terminating subscriber according to the received transmission result response of the short message.

4. The system according to any one of claims 1-3, wherein the system further comprises a home short message service center (SMSC) of the originating subscriber;
the SMSC is adapted to receive the short message transferred by the SCP, cache the short message, transform the format of the received short message, and send the short message after the format transformation to the SCP; and to receive the transmission result response of the short message transferred by the SCP, start a process for resending the short message to the terminating subscriber when the received transmission result response of the short message is a transmission failure response of the short message, and delete the cached short message when the received transmission result response of the short message is a transmission success response of the short message or the time for caching the short message exceeds the preset longest time for caching the short message.

5. The system according to any one of claims 1-3, wherein the SCP is further adapted to cache the received short message, transform the format of the received short message; and to receive the transmission result response of the short message returned by the T_MSC, and start a process for resending the short message to the terminating subscriber when the received transmission result response of the short message is a transmission failure response of the short message, and delete the cached short message when the received transmission result response of the short message is a transmission success response of the short message or the time for caching the short message exceeds the preset longest time for caching the short message.

6. A method for delivering the mobile short message, based on a mobile short message system comprising an originating mobile switching center (O_MSC), a service control point (SCP) and a terminating mobile switching center (T_MSC), comprising:
a, transferring a short message to the SCP after receiving, by the O_MSC, the short message sent by an originating subscriber;
b, authenticating the subscriber after receiving the short message by the SCP, and transferring the short message to the T_MSC after authenticating successfully;
c, transferring the short message to a terminating subscriber after receiving the short message by the T_MSC, and returning a transmission result response of the short message to the SCP; and
d, charging, by the SCP, the subscriber according to the received transmission result response of the short message.

7. The method according to claim 6, wherein the step d is: deducting a short message fare from an account of the subscriber when the transmission result response of the short message received by the SCP is a transmission success response of the short message.

8. The method according to claim 6, wherein the step b further comprises: deducting a short message fare from an account of the subscriber when the SCP successfully authenticates the subscriber and executing the step for sending the short message to the T_MSC; and
the step d is: filling the deducted short message fare back to the account of the subscriber when the transmission result response of the short message received by the SCP is a transmission failure response of the short message.

9. The method according to any one of claims 6-8, wherein the system further comprises a short message service center (SMSC);
the step b further comprises: transferring the received short message to the SMSC after receiving the short message by the SCP; and caching the short message after receiving the short message by the SMSC, transforming the format of the received short message, and sending the short message after the format transformation to the SCP;
transferring the short message to the T_MSC in the step b is: transferring the received short message after the format transformation to the T_MSC;
the method further comprises the following steps after the step d:
e, transferring, by the SCP, the transmission result response of the short message returned from the T_MSC to the SMSC;
f, deleting the cached short message when the transmission result response of the short message received by the SMSC is the transmission success response of the short message and ending this flow; otherwise, starting a flow for resending the short message after the format transformation to the terminating subscriber, deleting the cached short message when the time for caching the short message exceeds the preset longest time for caching the short message, and ending this flow.

10. The method according to any one of claims 6-8, wherein the step b further comprises: caching the short message after receiving the short message by the SCP, transforming the format of the received short message, and executing the step for authenticating the subscriber in the step b;
transferring the short message to the T_MSC in the step b is: transferring, by the SCP, the short message after the format transformation to the T_MSC;
the method further comprises the following steps after the step d:
el, deleting the cached short message when the transmission result response of the short message received by the SCP is the transmission success response of the short message and ending this flow; otherwise, starting a flow for resending the short message after the format transformation to the terminating subscriber, deleting the cached short message when the time for caching the short message exceeds the preset longest time for caching the short message, and ending this flow.
